# EUROPEAN PATENT SPECIFICATION

(11) **EP 3 302 188 B1**
(45) Date of publication and mention of the grant of the patent: **29.04.2020**
(21) Application number: 16726579.2
(22) Date of filing: 02.06.2016
(51) Int. Cl.: A47J 31/44

(54) **A COFFEE MACHINE AND A CAPSULE SUITABLE TO BE USED IN COFFEE MACHINES**
KAFFEEMASCHINE UND GEEIGNETE KAPSEL ZUR VERWENDUNG IN KAFFEEMASCHINEN
MACHINE À CAFÉ ET CAPSULE APPROPRIÉE POUR ÊTRE UTILISÉE DANS DES MACHINES À CAFÉ

(30) Priority: 04.06.2015 TR 201506902
(43) Date of publication of application: 11.04.2018
(73) Proprietor: Arçelik Anonim Sirketi, 34445 Istanbul (TR)
(72) Inventor: ALPTEKIN, Ahmet, 34950 Istanbul (TR); AYAROGLU, Emre, 34950 Istanbul (TR); CENGIZ, Osman, 34950 Istanbul (TR); GERZELI, Ismail, 34950 Istanbul (TR); OZDEMIR, Musa, 34950 Istanbul (TR)
(86) International application number: PCT/EP2016/062515
(87) International publication number: WO 2016/193381

(56) References cited:
- EP-A1- 2 409 608
- US-A1- 2012 097 041
- US-A1- 2013 129 872

## Description

The present invention relates to a capsule containing coffee raw material and a coffee machine which is suitable for using the said capsule and that brews coffee by conveying the content of the capsule into a brewing chamber.

In coffee machines, the usage of the single use capsule wherein the coffee raw material is stored is known. The capsules are generally used for preparing coffee types such as espresso, etc. by piercing through the top of the capsule and passing high pressure hot water therethrough or for preparing beverages such Turkish coffee, etc. wherein the beverage raw material is poured into a brewing chamber or a glass. In both of these embodiments, if the user operates the coffee machine without placing a capsule inside the coffee machine or without removing the used capsule inside the coffee machine, accidentally or for another reason, the prepared beverage would be unsatisfactory. In such cases, the presence of the capsule placed inside the coffee machine should be detected. In the state of the art, methods enabling the detection of the presence of the capsule by means of RFID tags or barcodes are known. By means of these methods, the capsule is enabled to be detected, however, these methods are not practical and economical due to high costs of RFID or barcode readers.

Document US-A-2012/0097041 discloses a capsule comprising a magnetic member providing the detection of whether the capsule is placed into the machine.

In the state of the art American Patent Application No. US5072660, a coffee machine is disclosed, comprising a coffee package with a barcode and a barcode reader, wherein the presence and the weight of the coffee package are detected by reading the barcode thereon.

In the state of the art European Patent Application No. EP1405261, a system is disclosed, comprising a coffee machine having a capsule with an RFID tag thereon and an RFID reader.

In the state of the art Korean Patent Application No. KR20080088444, a system is disclosed, comprising a coffee machine having a capsule with a color coding thereon and a color code detection means.

The aim of the present invention is the realization of a coffee machine wherein the capsule placed therein is effectively detected and of a capsule suitable to be used in the said coffee machine.

Said aim is achieved by means of the combination of a coffee machine and a capsule according to independent claim 1.

In another embodiment of the present invention, the coffee machine changes the position of the magnetic member upon the opening of the capsule. In this embodiment, by changing the position of the magnetic element where the same cannot be detected by the coffee machine, the coffee machine is prevented from performing misdetection in case the user tries to reuse a used capsule.

In another embodiment of the present invention, a housing wherein the magnetic member is disposed is provided on the surface opposite the first opening of the receptacle. In a version of this embodiment, the housing has a form extending from the ceiling of the receptacle towards the interior of the receptacle and by means of the housing having such a form, the ceiling of the receptacle remains as a flat surface when the magnetic member is placed into the housing. In a version of this embodiment, the housing is long enough to allow the magnetic element to be displaced and moved inside the housing as the coffee machine contacts and pushes the magnetic element. In another version of this embodiment, the magnetic element is snap-fittingly inserted into the housing.

In another embodiment of the present invention, a second opening allowing access into the housing is provided on the ceiling of the receptacle. In a version of this embodiment, the second opening is covered by means of a second folio after the magnetic element is inserted. When the capsule is placed, the coffee machine detects the magnetic element from under the second foil.

In another embodiment of the present invention, the receptacle is placed inside a sheath preferably produced from thermoformable plastic. Thus, the second opening arranged on the receptacle is covered by the sheath. In a version of this embodiment, the second opening is covered with the second foil and the receptacle is placed inside the sheath in this configuration. In another version of this embodiment, the sheath has a protrusion corresponding to the second opening and thus, when the capsule is being opened, the coffee machine enables the magnetic member to be damaged by squeezing the protrusion or the magnetic member to be pushed into the housing.

In another embodiment of the present invention, at least one claw is provided on the inner surface of the housing in order to prevent the magnetic member moving in the housing from dislodging. Thus, as a result of the displacement of the magnetic member, the magnetic effect of the magnetic member in the coffee machine weakens and thus, the coffee machine is prevented from detecting the magnetic member. By means of this embodiment of the present invention, the user is prevented from preparing a distasteful coffee with a used capsule and the user satisfaction is maintained.

In another embodiment of the present invention, the housing is produced so as to be detachably attached into the receptacle. In this embodiment, the second opening has a size which does not allow the passage of the magnetic member. Therefore, the magnetic member is first placed inside the housing and then the housing is joined with the receptacle. Thus, the magnetic member is prevented from dislodging from/falling out of the second opening.

The coffee machine of present invention comprises a sensor that is disposed on the body thereof and that detects the magnetic member on the capsule. As the capsule is placed inside the coffee machine, the sensor detects the magnetic field generated by the magnetic member. Therefore, whether the capsule is placed into the coffee machine is effectively detected.

In another embodiment of the present invention, the sensor is positioned on the cover of the coffee machine. As the cover is closed, the sensor is moved to a position closer to the magnetic member on the capsule and the presence of the capsule is detected by means of the detection of the magnetic field of the magnetic member. In a version of this embodiment, the cover damages the magnetic member upon the opening of the capsule.

In another embodiment of the present invention, the sensor is disposed on the capsule housing wherein the capsule is seated. Alternatively to the above-mentioned embodiment, the sensor can be disposed on the capsule housing.

In another embodiment of the present invention, the sensor is a cost-effective reed switch that is used for magnetic detection. The reed switch consists of two conductors positioned in close proximity without contacting each other and when there is a magnetic field around the switch, the conductors contact each other with the effect of the magnetic field and turn the switch on.

In another embodiment of the present invention, the coffee machine comprises a squeezing member that is disposed on the cover and that presses on the capsule placed into the capsule housing from above. In a version of this embodiment, the coffee machine comprise a tooth that is disposed on the squeezing member used for squeezing the capsule, that contacts the magnetic member when the cover is closed and that enables the magnetic member to be pushed into the housing. With the magnetic member being pushed into the housing by means of the tooth, the sensor is prevented from detecting the magnetic member and thus, the user is prevented from using a used capsule inadvertently.

In another embodiment of the present invention, a shield is provided on the coffee machine in order to protect the sensor from the magnetic fields in the proximity thereof. For instance, if the sensor is on the cover, the shield, by covering the cover, prevents the external magnetic fields from affecting the sensor.

In another embodiment of the present invention, when the sensor does not generate any signal, it is decided that the capsule is not placed into the capsule housing and the coffee brewing process is not initiated. In another version of this embodiment, the user is warned when no signal can be received from the sensor.

In an embodiment of the present invention, the coffee machine is a Turkish coffee machine.

By means of the capsule and the coffee machine of the present invention, whether the capsule is present into the coffee machine, in other words whether the capsule is placed into the coffee machine is detected efficiently in a cost effective way. Aforementioned problems of the previous technique are solved in a simplified and economical manner with respect to the state of the art solutions. Moreover, by means of other embodiments of the present invention, the coffee machine is prevented from detecting the capsule when a used capsule is tried to be reused.

The capsule realized in order to attain the aim of the present invention is illustrated in the attached figures, where:
Figure 1 - is the schematic view of a capsule.
Figure 2 - is the schematic view of a coffee machine.

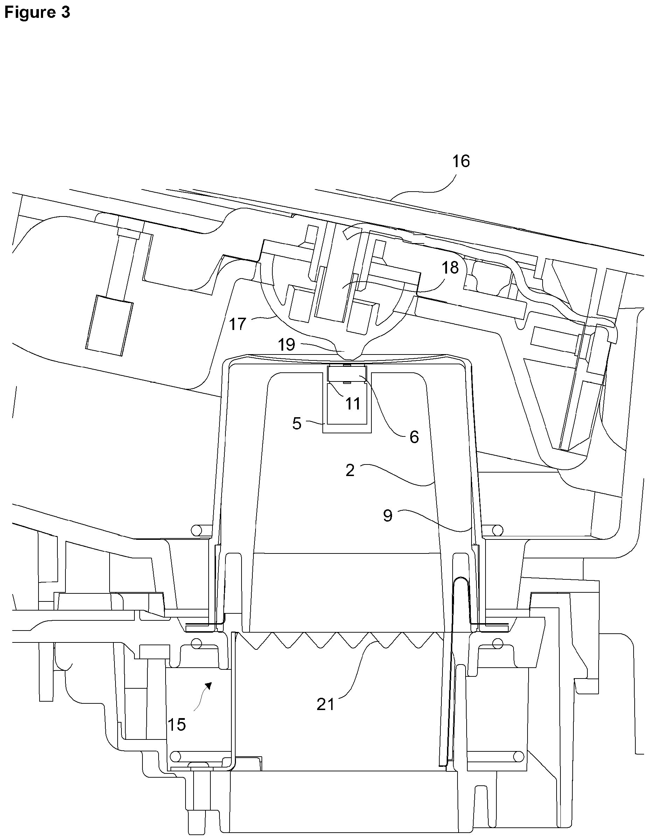

Figure 3 - is the schematic view of the capsule placed into the capsule housing and the half-open cover.

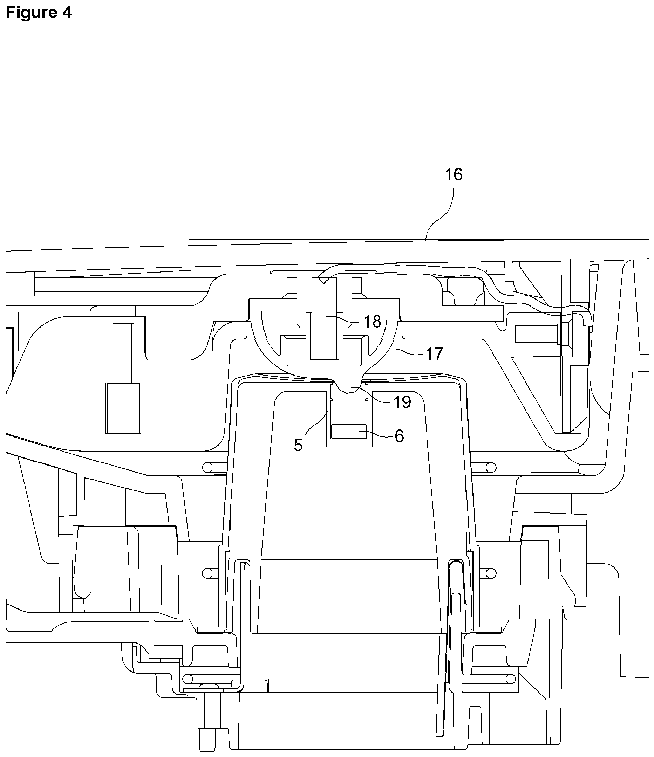

Figure 4 - is the schematic view of the capsule placed into the capsule housing and the closed cover.
Figure 5 - is the schematic view of the capsule related to an embodiment of the present invention.
Figure 6 - is the schematic view of the capsule in Figure 5 in the opened state.
Figure 7 - is the schematic view of the capsule related to another embodiment of the present invention.
Figure 8 - is the graphic of the signal generated by the sensor related to an embodiment of the present invention. In the graphic, the durations wherein the sensor generates signals are shown with "1" and the durations wherein the sensor does not generate any signal are shown with "0".
Figure 9 - is the graphic of the signal generated by the sensor related to another embodiment of the present invention.

The elements illustrated in the figures are numbered as follows:

- 1.: Capsule
- 2.: Receptacle
- 3.: First opening
- 4.: First folio
- 5.: Housing
- 6.: Magnetic member
- 7.: Second opening
- 8.: Second folio
- 9.: Sheath
- 10.: Protrusion
- 11.: Claw
- 12.: Coffee machine
- 13.: Body
- 14.: Brewing chamber
- 15.: Capsule housing
- 16.: Cover
- 17.: Squeezing member
- 18.: Sensor
- 19.: Tooth
- 20.: Shield
- 21.: Cutter

The capsule (1) is suitable for being used in coffee machines (12) and comprises a receptacle (2) wherein the coffee to be brewed is stored, a first opening (3) arranged on the bottom surface of the receptacle (2) and a first foil (4) that covers the first opening (3). The coffee in the receptacle (2) can be particularly Turkish coffee or instant coffee. The first foil (4) is attached to the edges surrounding the first opening (3) of the receptacle (2). The capsule (1) is opened when a force is exerted onto the receptacle (2) and the first foil (4) is deformed by the coffee machine (12).

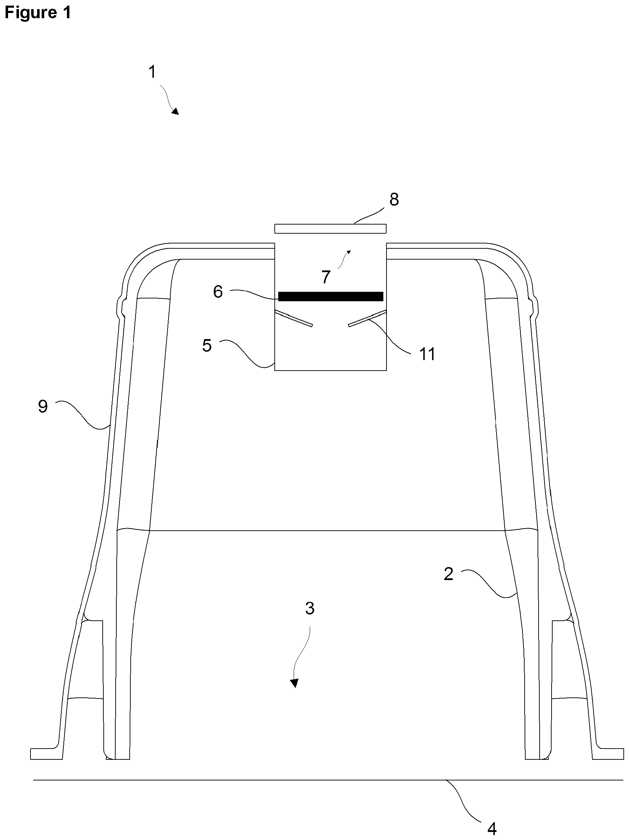

The capsule (1) of the present invention comprises a magnetic member (6) that is disposed on the receptacle (2) and that provides the detection of whether the capsule (1) is placed into the coffee machine (12). When the user places the capsule (1) into the coffee machine (12), the coffee machine (12) detects the presence of the capsule (1) by means of the magnetic field generated by the magnetic member (6) on the capsule (1). Thus, the coffee machine (12) is enabled to detect that the capsule (1) is not in place when the user forgets to place the capsule (1) into the coffee machine (12). The magnetic member (6) is fixed onto the ceiling of the receptacle (2) or the lateral surfaces of the receptacle (2) by means of adhesives or other fixing methods so as to be invisible to the user (Figure 1).

In an embodiment of the present invention, the magnetic member (6) is a magnet. By using state of the art simple magnets, cost advantage is provided.

In another embodiment of the present invention, the magnetic member (6) is produced from magnetic plastic.

In another embodiment of the present invention, the magnetic member (6) is produced from ferromagnetic metal.

In another embodiment of the present invention, the magnetic member (6) is a conductive coil. In this embodiment, by means of a transmitter coil (not shown in the figures) disposed on the coffee machine (12), the conductive coil on the capsule (1) is induced and magnetized. Thus, the coffee machine (12) provides the detection of the magnetic member (6).

In another embodiment of the present invention, the magnetic member (6) is damaged upon the opening of the capsule (1) placed into the coffee machine (12). In this example, for example, when the cover (16) of the coffee machine (12) is closed, the cover (16) crushes the capsule (1) and destroys the magnetic member (6). Thus, the magnetic member (6) is prevented from being detected again by the coffee machine (12). The coffee machine (12) may damage the magnetic member by demagnetizing the magnetic member (6) by magnetically or electrically affecting the magnetic member (6) after the magnetic member (6) is detected. In this embodiment, in case the user forgets to change the capsule (1) after using the same once, the capsule (1) in the coffee machine (12) is prevented from being detected.

In another embodiment of the present invention, the magnetic member (6) changes position upon the opening of the capsule (1) placed into the coffee machine (12). In this embodiment, as the capsule (1) is used, in other words as the coffee machine (12) opens the first folio (4) by cutting or deforming the same, the magnetic member (6) is actuated by the coffee machine (12) and shifts to a position that cannot be detected by the coffee machine (12).

In another embodiment of the present invention, the capsule (1) comprises a housing (5) that is arranged on the receptacle (2) and wherein the magnetic member (6) is placed. The magnetic member (6) is placed into the housing (5). The capsule (1) comprises the first opening (3) arranged on a surface of the receptacle (2), the first folio (4) that covers the first opening (3), the housing (5) that is disposed on the opposite surface with respect to the first opening (3), extending into the receptacle (2), and the magnetic member (6) that is placed into the housing (5) (Figure 1).

In another embodiment of the present invention, the housing (5) extends from the ceiling of the receptacle (2) into the receptacle (2) when the capsule (1) is positioned so that the first folio (4) faces downward. In this embodiment, the housing (5) uses the volume of the receptacle (2) and the magnetic member (6) can be placed without increasing the total volume of the capsule (1) (Figure 1).

In another embodiment of the present invention, the capsule (1) comprises a second opening (7) that is arranged on the ceiling of the receptacle (2) and that enables the magnetic member (6) to be placed into the housing (5). The second opening (7) forming the port of the housing (5) is arranged on the ceiling of the receptacle (2) (Fig. 1).

In another embodiment of the present invention, the capsule (1) comprises a second folio (8) that covers the second opening (7). In this embodiment, after the magnetic member (6) is placed into the housing (5), the second opening (7) is covered by the second folio (8) and the magnetic member (6) is prevented from falling out of the housing (5). Moreover, the second folio (8) is produced from a material that would not prevent the detection of the magnetic member (6) by the coffee machine (12) (Figure 1).

In another embodiment of the present invention, the capsule (1) comprises a sheath (9) wherein the receptacle (2) is seated almost without any gaps and that provides the covering of the second opening (7) of the housing (5) wherein the magnetic member (6) is placed. In this embodiment, by seating the receptacle (2) into the sheath (9), the magnetic member (6) is rendered invisible for the user and the sheath (9) and the capsule (1) obtain an esthetic appearance, thus improving the quality perception of the user (Figure 1).

In another embodiment of the present invention, the sheath (9) is produced from thermoformable plastic material.

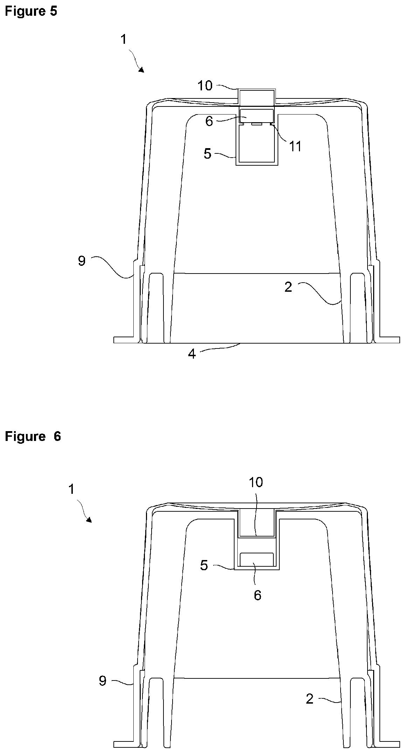

In another embodiment of the present invention, the sheath (9) comprises a protrusion (10) that is disposed so as to face the second opening (7) of the housing (5) and that, by being bent with the contact of the coffee machine (12), enables the magnetic member (6) to be pushed into the housing (5). In this embodiment, when the capsule (1) is desired to be opened after being placed into the coffee machine (12), the protrusion (10) on the sheath (9) is bent with the contact of the coffee machine (12) and enables the magnetic member (6) located just thereunder to be pushed into the housing (5). Thus, the magnetic member (6) leaves the detection field of the coffee machine (12) and the magnetic member (6) on the used capsule (1) is prevented from being detected again when the used capsule (1) is tried to be used again (Figure 5 and Figure 6).

In another embodiment of the present invention, the housing (5) is so long as to enable the magnetic member (6) to move therein as the coffee machine (12) pushes the magnetic member (6) while the capsule (1) is being opened. In this embodiment, as the capsule (1) is opened, the coffee machine (12) pushes the magnetic member (6) and enables the magnetic member (6) to move into the housing (5). As the magnetic member (6) moves in the housing (5), the magnetic field generated by the magnetic member (6) on the coffee machine (12) weakens and the magnetic member (6) is deliberately prevented from being detected from the coffee machine (12) by the producer. By means of this embodiment, in case the user tries to prepare coffee when a used capsule (1) is present on the coffee machine (12), the coffee machine (12) is enabled to detect that no new capsule (1) is available in the capsule housing (15) (Figure 1).

In another embodiment of the present invention, the magnetic member (6) is snap-fittingly placed into the housing (5).

In another embodiment of the present invention, the capsule (1) comprises at least one claw (11) that is disposed in the housing (5), that extends from the inner surface of the housing (5) towards the center of the housing (5) in an openable-closable manner and that prevents the magnetic member (6) moving in the housing (5) from getting out of the housing (5). As the coffee machine (12) pushes the magnetic member (6) into the housing (5), the claw (11) opens into the housing (5) to allow the magnetic member (6) to enter the housing (5) and then closes to provide the trapping of the magnetic member (6) in the housing (5) (Figure 1).

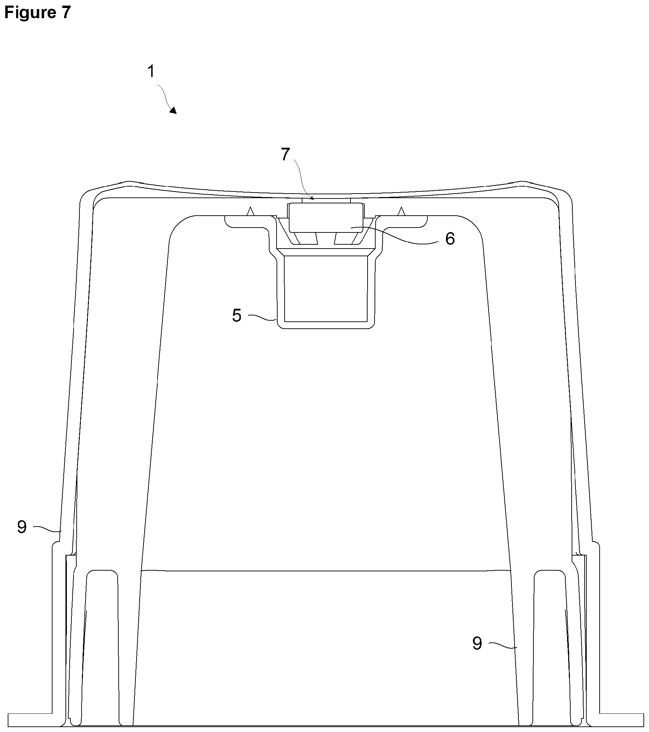

In another embodiment of the present invention, in the capsule (1), the housing (5) can be detachably attached onto the receptacle (2) and the second opening (7) has a narrow structure so as to prevent the magnetic member (6) from entering therein. In this embodiment, the receptacle (2) is produced so that the second opening (7) is disposed on the ceiling thereof and as the magnetic member (6) is placed into the housing (5), the housing (5) is mounted into the receptacle (2). As the second opening (7) is narrow enough so as to prevent the passage of the magnetic member (6), it is ensured that the magnetic member (6) does not dislodge due to any reasons such as transportation, etc. Thus, every capsule (1) purchased by the user is enabled to be detected by the coffee machine (12) (Figure 7).

In another embodiment of the present invention, the edges of the capsule (1) surrounding the first opening (3) have a double-walled structure. By mean of the double-walled structure, the first folio (4) can be more easily cut and opened and the coffee beans or grounds are prevented from adhering onto the first folio (4) in a manner to be prevented from being transferred to the coffee machine (12).

The coffee machine (12) comprises a body (13), a brewing chamber (14) disposed inside the body (13), a capsule housing (15) that is disposed on the brewing chamber (14) and a cover (16) covering the body (13). As the user places the capsule (1) into the capsule housing (15) and closes the cover (16), the first folio (4) is deformed and the coffee raw material in the receptacle (2) is enabled to be poured through the first opening (3) into the brewing chamber (14).

In another embodiment of the present invention, the coffee machine (12) comprises a cutter (21) that provides the cutting of the first folio (4). As the user places the capsule (1) into the capsule housing (15) and closes the cover (16), the cutter (21) on the coffee machine (12) cuts the first folio (4) and the coffee raw material in the receptacle (2) is enabled to be poured through the first opening (3) into the brewing chamber (14).

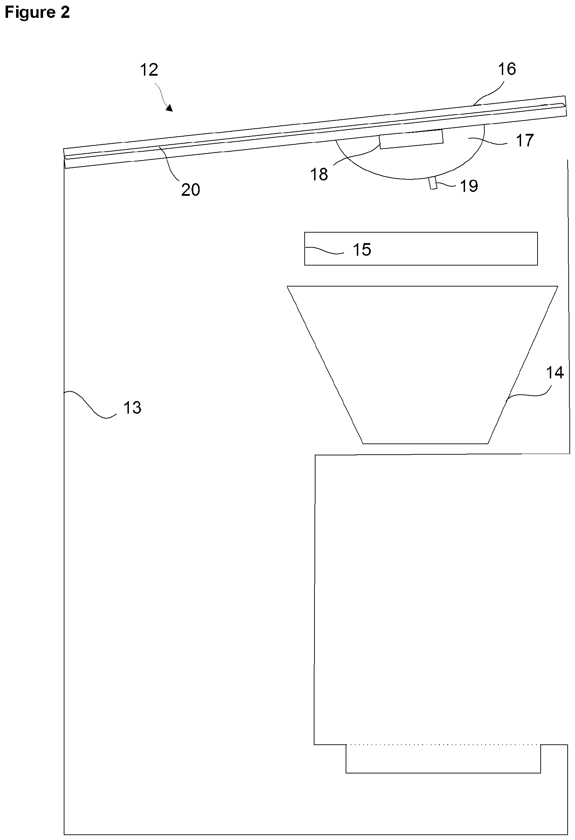

The coffee machine (12) of present invention comprises a sensor (18) that is disposed on the body (13) and that detects the magnetic member (6) on the capsule (1). The sensor (18) is positioned in the body (13) so as to be aligned with the magnetic member (6) in the capsule (1) when the cover (16) is closed. For example, if the magnetic member (6) is fixed to the lateral surfaces of the receptacle (2), the sensor (18) is positioned so as to face the lateral surface of the receptacle (2) when the capsule (1) is placed into the capsule housing (15) (Figure 2).

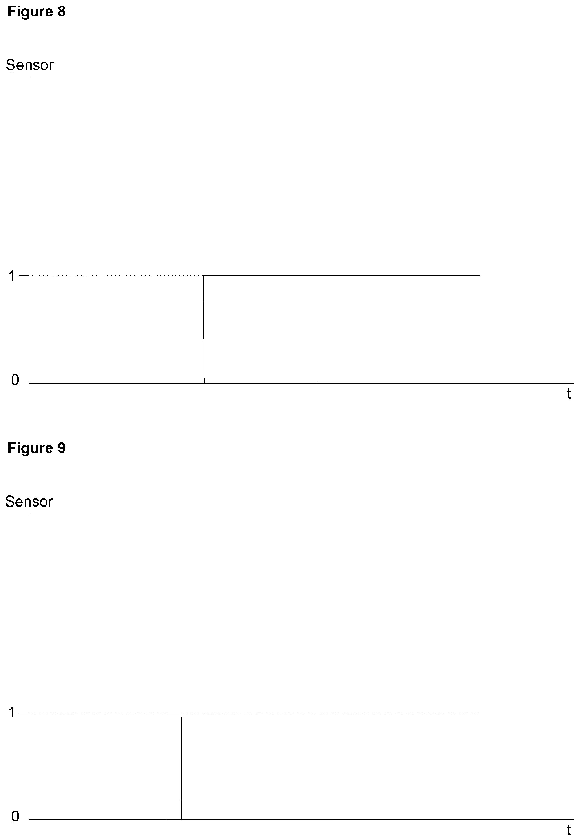

As the capsule (1) comprising the magnetic member (6) disclosed above in different embodiments is placed into the capsule housing (15) and the cover (16) is closed for brewing coffee, the sensor (18) is affected by the magnetic field of the magnetic member (6) and generates a signal and thus, the placement of the capsule (1) into the coffee machine (12) is detected. When the user closes the cover (16) without placing the capsule (1), the sensor (18) does not generate any signal and the coffee machine (12) that does not receive any signal from the sensor (18) decides that no capsule (1) is present in the capsule housing (15) (Figure 8).

In another embodiment of the present invention, the sensor (18) is disposed on the cover (16). Thus, as the user places the capsule (1) into the capsule housing (15) and closes the cover (16), the sensor (18) gets closer to the magnetic member (6) and the sensor (18) is enabled to generate a signal due to the magnetic field of the magnetic member (6) and the presence of the capsule (1) is detected (Figure 2).

In another embodiment of the present invention, the cover (16) damages the magnetic member (6) as the capsule (1) is opened. In this embodiment, the cover (16) damages the magnetic member (6) by crushing or destroying the magnetic member (6) and prevents the same from being detected by the sensor (18).

In another embodiment of the present invention, the coffee machine (12) comprises a squeezing member (17) that is disposed on the inner surface of the cover (16) and that applies pressure on the capsule (1) placed into the capsule housing (15). As the user places the capsule (1) into the capsule housing (15) and closes the cover (16), the squeezing member (17) squeezes the capsule (1). Thus, the first folio (4) is enabled to be opened more easily.

In another embodiment of the present invention, the sensor (18) is disposed on the capsule housing (15). Thus, as the capsule (1) is placed into the capsule housing (15), the presence of the capsule (1) is detected by the sensor (18).

In another embodiment of the present invention, the sensor (18) is a reed switch. In this embodiment, as the magnetic member (6) gets closer to the sensor (18), the magnetic field of the magnetic member (6) enables the terminals of the reed switch to contact each other and thus, the signal transmission is realized and the presence of the capsule (1) is detected.

In another embodiment of the present invention, the coffee machine (12) comprises a tooth (19) that is disposed on the squeezing member (17) and that enters through the ceiling of the capsule (1) when the cover (16) is closed, thus enabling the magnetic member (6) to be pushed into the housing (5). As the cover (16) is closed, the tooth (19) is aligned with the housing (5) arranged on the ceiling of the receptacle and enters the housing (5), thus pushing the magnetic member (6) into the housing (5). In this embodiment, the magnetic member (6) is trapped in the housing (5) after the capsule (1) is used and the effect of the magnetic field generated by the magnetic member (6) on the sensor (18) decreases. Thus, in case the user forgets to change the used capsule (1) and tries to brew coffee, the coffee machine (12) can detect that no capsule (1) is present in the capsule housing (15) (Figure 2 and Figure 9).

In another embodiment of the present invention, the coffee machine (12) comprises a shield (17) that is disposed on cover (16) and that protects the sensor (18) against external magnetic factors. By means of the shield (20), the magnetic fields in the vicinity cannot affect the sensor (18). Thus, the coffee machine (12) is prevented from performing misdetection (Figure 2).

In an embodiment of the present invention, the coffee machine (12) does not initiate the coffee brewing process if no signal can be received from the sensor (18). When no signal is received from the sensor (18), it is determined that no capsule (1) is placed into the capsule housing (15) and the coffee machine (12) does not initiate the coffee brewing process for not preparing a distasteful coffee from the used capsule (1) or not preparing only hot water in the absence of the capsule (1).

In an embodiment of the present invention, the coffee machine (12) warns the user if no signal can be received from the sensor (18). When no signal is received from the sensor (18), it is determined that no capsule (1) is placed into the capsule housing (15) and the user is warned that no capsule (1) is present in the capsule housing (15).

The coffee machine (12) of the present invention can be used to prepare Turkish coffee.

By means of the magnetic member (6) disposed on the capsule (1) and the sensor (18) disposed on the coffee machine (12), as the user places the capsule (1) into the capsule housing (15), the presence of the capsule (1) is immediately detected. The magnetic field generated by a simple magnetic member (6) disposed on the capsule (1) can be detected by means of the sensor (18) without any problems. As the tooth (19) pushes the magnetic member (6) into the housing (5), the magnetic field acting on the sensor (18) is deliberately weakened and the magnetic field on the used capsule (1) is prevented from being detected.

## Claims

1. A coffee machine (12) and a capsule (1) suitable for being used in the coffee machine (12), the capsule (1) comprising a receptacle (2) wherein the coffee to be brewed is stored, a first opening (3) arranged on the bottom surface of the receptacle (2), a first foil (4) that covers the first opening (3), and a magnetic member (6) disposed on the receptacle (2); the coffee machine (12) comprising a body (13), a brewing chamber (14) disposed inside the body (13), a capsule housing (15) disposed on the brewing chamber (14) and wherein a capsule (1) is placed, a cover (16) covering the body (13), and a sensor (18) disposed on the body (13) for detecting whether the capsule (1) is placed into the coffee machine (12) by detecting the magnetic member (6) on the capsule (1), **characterized by** the magnetic member (6) arranged to be damaged or displaced by the cover (16) when the capsule (1) is placed into and opened by the coffee machine (12), such that the capsule (1) can no longer be detected by the coffee machine (12).

2. A coffee machine (12) and a capsule (1) as in Claim 1, **characterized by** the magnetic member (6) that is a magnet or a conductive coil.

3. A coffee machine (12) and a capsule (1) as in Claim 1, **characterized by** the magnetic member (6) that is produced from magnetic plastic material or ferromagnetic metal.

4. A coffee machine (12) and a capsule (1) as in any one of the above claims, **characterized by** a housing (5) that is arranged on the receptacle (2) and wherein the magnetic member (6) is placed.

5. A coffee machine (12) and a capsule (1) as in Claim 4, **characterized by** the housing (5) that extends into the receptacle (2).

6. A coffee machine (12) and a capsule (1) as in Claim 4 or 5, **characterized by** a second opening (7) that opens from the ceiling of the receptacle (2) into the housing (5) and that provides the placement of the magnetic member (6).

7. A coffee machine (12) and a capsule (1) as in Claim 6, **characterized by** a second folio (8) that covers the second opening (7).

8. A coffee machine (12) and a capsule (1) as in Claim 6 or 7, **characterized by** a sheath (9) wherein the receptacle (2) is seated almost without any gaps and that provides the covering of the second opening (7) of the housing (5) wherein the magnetic member (6) is placed.

9. A coffee machine (12) and a capsule (1) as in Claim 8, **characterized by** the sheath (9) comprising a protrusion (10) that is disposed so as to face the second opening (7) of the housing (5) and that, by being bent with the contact of the coffee machine (12), enables the magnetic member (6) to be pushed into the housing (5).

10. A coffee machine (12) and a capsule (1) as in any one of the claims 4 to 9, **characterized by** the housing (5) that is so long as to enable the magnetic member (6) to move therein as the coffee machine (12) pushes the magnetic member (6) while the capsule (1) is being opened.

11. A coffee machine (12) and a capsule (1) as in Claim 4, **characterized by** the magnetic member (6) that is snap-fittingly seated into the housing (5).

12. A coffee machine (12) and a capsule (1) as in any one of the claims 4 to 11, **characterized by** at least one claw (11) that is disposed in the housing (5), that extends from the inner surface of the housing (5) towards the center of the housing (5) in an openable-closable manner and that prevents the magnetic member (6) moving in the housing (5) from getting out of the housing (5).

13. A coffee machine (12) and a capsule (1) as in Claim 4, **characterized by** the housing (5) that can be detachably attached onto the receptacle (2) and the second opening (7) that is narrow enough so as to prevent the magnetic member (6) from entering.

14. A coffee machine (12) and a capsule (1) as in any one of the above claims, **characterized by** a squeezing member (17) that is disposed on the inner surface of the cover (16) and that applies pressure on the capsule (1) placed into the capsule housing (15).

15. A coffee machine (12) and a capsule (1) as in any one of the above claims, wherein the coffee machine (12) warns the user and/or does not initiate the coffee brewing process if no signal is received from the sensor (18).

## Patentansprüche

1. Eine Kaffeemaschine (12) und eine Kapsel (1), die für die Verwendung in der Kaffeemaschine (12) geeignet ist, wobei die Kapsel (1) einen Behälter (2) aufweist, in dem der zu brühende Kaffee aufbewahrt wird, eine erste Öffnung (3), die an der Bodenfläche des Behälters (2) angeordnet ist, eine erste Folie (4), die die erste Öffnung (3) bedeckt, und ein magnetisches Element (6), das an dem Behälter (2) angeordnet ist; die Kaffeemaschine (12) umfasst einen Körper (13), eine Brühkammer (14), die in der Brühkammer (13) angeordnet ist, ein Kapselgehäuse (15), wobei es auf der Brühkammer (14) angeordnet ist und in dessen eine Kapsel (1) angeordnet ist, eine Abdeckung (16), die den Körper (13) bedeckt, einen Sensor (18), der an dem Körper (13) angeordnet ist, um zu erfassen, ob die Kapsel (1) in die Kaffeemaschine (12) eingesetzt ist, indem das magnetische Element (6) die auf der Oberfläche liegende Kapsel (1) erfasst; **gekennzeichnet ist sie dadurch**, dass das magnetische Element (6) so angeordnet ist, dass es durch die Abdeckung (16) beschädigt oder verschoben wird, wenn die Kapsel (1) in die Kaffeemaschine (12) eingesetzt und von dieser geöffnet wird, so dass die Kapsel (1) nicht mehr von der Kaffeemaschine (12) erfasst werden kann.

2. Eine Kaffeemaschine (12) und eine Kapsel (1), wie in Anspruch 1 aufgeführt, **sind dadurch gekennzeichnet, dass** das Magnetelement (6) ein Magnet oder eine leitende Spule ist.

3. Eine Kaffeemaschine (12) und eine Kapsel (1), wie in Anspruch 1 aufgeführt, **sind dadurch gekennzeichnet, dass** das magnetische Element (6) aus magnetischem Kunststoffmaterial oder ferromagnetischem Metall hergestellt ist.

4. Eine Kaffeemaschine (12) und eine Kapsel (1), wie in einem der vorherigen Ansprüchen aufgeführt, **sind dadurch gekennzeichnet, dass** ein Gehäuse (5) an dem Behälter (2) angeordnet ist und darin das Magnetelement (6) angeordnet ist.

5. Eine Kaffeemaschine (12) und eine Kapsel (1), wie in Anspruch 4 aufgeführt, **sind dadurch gekennzeichnet, dass** das Gehäuse (5) sich in den Behälter (2) erstreckt.

6. Eine Kaffeemaschine (12) und eine Kapsel (1), wie in Anspruch 4 oder 5 aufgeführt, **sind dadurch gekennzeichnet, dass** eine zweite Öffnung (7) sich von der Decke des Behälters (2) in das Gehäuse (5) öffnet und die Platzierung vom magnetischen Element (6) ermöglicht.

7. Eine Kaffeemaschine (12) und eine Kapsel (1), wie in Anspruch 6 aufgeführt, **sind dadurch gekennzeichnet, dass** ein zweites Folio (7) die zweite Öffnung (7) abdeckt.

8. Eine Kaffeemaschine (12) und eine Kapsel (1), wie in Anspruch 6 oder 7 aufgeführt, **sind dadurch gekennzeichnet, dass** eine Hülle (9) in der Aufnahme (2) fast lückenlos sitzt und die zweite Öffnung (7) des Gehäuses (5) abdeckt, in der das Magnetelement (6) angeordnet ist.

9. Eine Kaffeemaschine (12) und eine Kapsel (1), wie in Anspruch 8 aufgeführt, **sind dadurch gekennzeichnet, dass** die Hülle (9) einen Vorsprung (10) umfasst, der so angeordnet ist, dass er zu der zweiten Öffnung (7) des Gehäuses (5) zeigt und durch Biegen mit dem Kontakt der Kaffeemaschine (12) es ermöglicht, dass das magnetische Element (6) in das Gehäuse (5) geschoben werden kann.

10. Eine Kaffeemaschine (12) und eine Kapsel (1), wie in einem der Ansprüche 4 bis 9 aufgeführt, **sind dadurch gekennzeichnet, dass** das Gehäuse (5) so lang ist, dass sich das Magnetelement (6) darin bewegen kann, wenn die Kaffeemaschine (12) das Magnetelement (6) drückt, während die Kapsel (1) geöffnet wird.

11. Eine Kaffeemaschine (12) und eine Kapsel (1), wie in Anspruch 4 aufgeführt, **sind dadurch gekennzeichnet, dass** das Magnetelement (6) einrastend im Gehäuse (5) sitzt.

12. Eine Kaffeemaschine (12) und eine Kapsel (1), wie in einem der Ansprüche 4 bis 11 aufgeführt, **sind dadurch gekennzeichnet, dass** mindestens eine Klaue (11) in dem Gehäuse (5) angeordnet ist, die sich von der Innenfläche des Gehäuses (5) in Öffnungs-/ Schließmitte zur Mitte des Gehäuses (5) erstreckt und verhindert , dass sich das Magnetelement (6) sich im Gehäuse (5) vom Verlassen des Gehäuses (5) bewegt.

13. Eine Kaffeemaschine (12) und eine Kapsel (1), wie in Anspruch 4 aufgeführt, **sind dadurch gekennzeichnet, dass** das Gehäuse (5) abnehmbar an der Aufnahme (2) angebracht werden kann und dass die zweite Öffnung (7) schmal genug ist, um das Eindringen des Magnetelements (6) zu verhindern.

14. Eine Kaffeemaschine (12) und eine Kapsel (1), wie in einem der vorherigen Ansprüchen aufgeführt, **sind dadurch gekennzeichnet, dass** ein Quetschelement (17) auf der Innenfläche der Abdeckung (16) angeordnet ist und Druck auf die in das Kapselgehäuse (15) eingesetzte Kapsel (1) ausübt.

15. Eine Kaffeemaschine (12) und eine Kapsel (1), wie in einem der vorherigen Ansprüchen aufgeführt, warnt den Benutzer und / oder leitet den Kaffeebrühvorgang nicht ein, wenn kein Signal vom Sensor (18) empfangen wird.

## Revendications

1. Une machine à café (12) et une capsule (1) adaptée pour être utilisée dans la machine à café (12), la capsule (1) comprenant un réceptacle (2) dans lequel le café à infuser est stocké, une première ouverture (3) disposée sur la surface inférieure du réceptacle (2), une première feuille (4) qui recouvre la première ouverture (3), et un élément magnétique (6) disposé sur le réceptacle (2) ; la machine à café (12) comprenant un corps (13), une chambre de percolation (14) disposée à l'intérieur du corps (13), un logement de capsule (15) disposé sur la chambre de percolation (14) et dans lequel une capsule (1) est placée, un couvercle (16) recouvrant le corps (13), et un capteur (18) disposé sur le corps (13) pour détecter si la capsule (1) est placée dans la machine à café (12) en détectant l'élément magnétique (6) sur la capsule (1), **est caractérisé en ce que** l'élément magnétique (6) est agencé pour être endommagé ou déplacé par le couvercle (16) lorsque la capsule (1) est placée dans la machine à café (12) et ouverte par celle-ci, de sorte que la capsule (1) ne peut plus être détectée par la machine à café (12).

2. Une machine à café (12) et une capsule (1) comme dans la déclaration 1, **est caractérisée en ce que** l'élément magnétique (6) est un aimant ou une bobine conductrice.

3. Une machine à café (12) et une capsule (1) comme dans la déclaration 1, **est caractérisée en ce que** l'élément magnétique (6) est fabriqué en matière plastique magnétique ou en métal ferromagnétique.

4. Une machine à café (12) et une capsule (1) comme dans l'une quelconque des déclarations ci-dessus, **est caractérisée en ce qu'**un boîtier (5) est disposé sur le réceptacle (2) et dans lequel est placé l'élément magnétique (6).

5. Une machine à café (12) et une capsule (1) comme dans la déclaration 4, **est caractérisée en ce que** le boîtier (5) s'étend dans le réceptacle (2).

6. Une machine à café (12) et une capsule (1) comme dans la déclaration 4 ou 5, **est caractérisée en ce qu'**elle comporte une deuxième ouverture (7) qui s'ouvre depuis le plafond du réceptacle (2) dans le boîtier (5) et qui permet de placer l'élément magnétique (6).

7. Une machine à café (12) et une capsule (1) comme dans la déclaration 6, **est caractérisée en ce qu'**un deuxième folio (8) recouvre la deuxième ouverture (7).

8. Une machine à café (12) et une capsule (1) comme dans la déclaration 6 ou 7, **est caractérisée en ce qu'**elle comporte une gaine (9) dans laquelle le réceptacle (2) est placé presque sans aucun interstice et qui assure le recouvrement de la deuxième ouverture (7) du boîtier (5) dans lequel est placé l'élément magnétique (6).

9. Une machine à café (12) et une capsule (1) comme dans la déclaration 8, **est caractérisée en ce que** l'enveloppe (9) comprend une saillie (10) qui est disposée de manière à faire face à la deuxième ouverture (7) du boîtier (5) et qui, en étant pliée avec le contact de la machine à café (12), permet à l'élément magnétique (6) d'être poussé dans le boîtier (5).

10. Une machine à café (12) et une capsule (1) comme dans l'une quelconque des déclarations 4 à 9, **est caractérisée en ce que** le boîtier (5) est si long qu'il permet à l'élément magnétique (6) de s'y déplacer lorsque la machine à café (12) pousse l'élément magnétique (6) pendant que la capsule (1) est ouverte.

11. Une machine à café (12) et une capsule (1) comme dans la déclaration 4, **est caractérisée en ce que** l'élément magnétique (6) est placé par encliquetage dans le boîtier (5).

12. Une machine à café (12) et une capsule (1) comme dans l'une quelconque des déclarations 4 à 11, **est caractérisée en ce qu'**elle comporte au moins une griffe (11) qui est disposée dans le boîtier (5), qui s'étend de la surface intérieure du boîtier (5) vers le centre du boîtier (5) de manière à pouvoir être ouverte et fermée et qui empêche l'élément magnétique (6) se déplaçant dans le boîtier (5) de sortir du boîtier (5).

13. Une machine à café (12) et une capsule (1) comme dans la déclaration 4, **est caractérisée en ce que** le boîtier (5) peut être fixé de manière amovible sur le réceptacle (2) et que la deuxième ouverture (7) est suffisamment étroite pour empêcher l'élément magnétique (6) d'y pénétrer.

14. Une machine à café (12) et une capsule (1) comme dans l'une quelconque des déclarations ci-dessus, **est caractérisée en ce qu'**un élément de pressage (17) est disposé sur la surface intérieure du couvercle (16) et qui applique une pression sur la capsule (1) placée dans le boîtier de la capsule (15).

15. Une machine à café (12) et une capsule (1) comme dans l'une quelconque des déclarations ci-dessus, dans laquelle la machine à café (12) avertit l'utilisateur et/ou ne déclenche pas le processus de préparation du café si aucun signal n'est reçu du capteur (18).
